# EUROPÄISCHE PATENTANMELDUNG

(11) **EP 0 560 011 A1**
(43) Veröffentlichungstag der Anmeldung: **15.09.1993**
(21) Anmeldenummer: 93100235.6
(22) Anmeldetag: 09.01.1993
(51) Int. Cl.: B29C 33/40, B29C 67/22

(54) **Form zur Herstellung von Latexschaumstoff**

(30) Priorität: 12.03.1992 DE 4207898
(71) Anmelder: HÜLS AKTIENGESELLSCHAFT, D-45764 Marl (DE)
(72) Erfinder: Knipp, Herbert, W-4358 Haltern 5 (DE); Schmidt, Friedrich Georg, Dr., W-4358 Haltern (DE); Tessmann, Karl, W-4370 Marl (DE)

(57) **Zusammenfassung**

Aufgabe war die Herstellung einer Kunststofform, die zur Herstellung von Latexschaumformteilen mittels Mikrowellenenergie geeignet ist, und die sich gut füllen und entformen läßt und neben guter Maßhaltigkeit eine lange Nutzungsdauer bietet. Diese Aufgabe wurde dadurch gelöst, daß die Formenwandung aus einer Formmasse besteht, die folgende Bestandteile enthält:
a) 20 bis 100 Gew.-Tle. Polyphenylenether,
b) 0 bis 30 Gew.-Tle. Styrolpolymerisate,
c) 0 bis 30 Gew.-Tle. schlagzähmodifizierende Zusätze,
d) 0 bis 40 Gew.-Tle. Verstärkungsmittel und/oder Füllstoffe sowie
e) 0 bis 15 Gew. -Tle. Zusatzstoffe,
wobei die Formenoberfläche passiviert ist.

Bei Verwendung dieser Form sind gegenüber dem konventionellen Verfahren zur Herstellung von Latexschaumformteilen die Zykluszeit und der Energieverbrauch wesentlich verringert.

## Beschreibung

Die Erfindung betrifft eine Form aus Kunststoff, die zur Herstellung von Latexschaumformteilen mittels Mikrowellenenergie geeignet ist.

Durch die Verwendung der erfindungsgemäßen Form werden wirtschaftliche und fertigungstechnische Vorteile erzielt.

Die Herstellung von Latexschaumstoff-Formteilen, wie z. B. Matratzen und Polstern, erfolgt z. Z. noch ausschließlich in Metallformen, die direkt mit Heizflüssigkeit oder Dampf beheizt werden. Der Einsatz von Mikrowellenenergie erfordert die Verwendung von nichtmetallischen Formen. In der DE-OS 39 00 809 wird die Herstellung von Latexschaumformteilen mittels Mikrowellenenergie beschrieben. Als Formenmaterial werden Werkstoffe mit einer Wärmeleitfähigkeit von weniger als 1 W/m x K, wie z. B. Polysulfon, Polycarbonat, Polytetrafluorethylen, Polyethylen und Polypropylen, vorgeschlagen.

Wie Versuche gezeigt haben, sind die in der DE-OS 39 00 809 erwähnten Kunststoffe für die Herstellung großer Formen, wie z. B. für Matratzen, jedoch nicht geeignet. Polyethylen, Polypropylen und Polytetrafluorethylen haben bei praktikablen Wandstärken eine zu geringe Steifigkeit und damit Formenstabilität, was zu einer ungenügenden Maßhaltigkeit der Formartikel führt.

Polycarbonat und Polysulfon zeigen bei den ständigen Temperaturwechselbeanspruchungen beim Befüllen der heißen Form mit kaltem Latexschaum, dem Einfluß von Feuchtigkeit, Alkali, Restmonomeren, Vulkanisationsmitteln und deren Spaltprodukten und der mechanischen Belastung der Form, z. B. beim Entformen der Artikel, schon nach kurzer Zeit Spannungsrisse.

R. Ostwald und A. F. Bogenschuetz, Kunststoffe (1988), 78 (6), Seiten 499 bis 504, beschreiben die Verwendung von Filmen, die unter anderem aus Polyphenylenether bestehen können, als polymere Korrosionsschutzschicht für Hochfrequenz-Bauteile.

In der EP-A-O 325 779 und der EP-A-O 377 115 werden geschäumte Lebensmittel-Verpackungsmaterialien für den Gebrauch in Mikrowellenöfen beschrieben, die aus Formmassen auf Basis von Polyphenylenether bestehen.

Der Fachmann könnte diesen Schriften eventuell den Hinweis entnehmen, daß Formmassen auf Basis von Polyphenylenether ein geeignetes Material zur Herstellung von Formen wären, die zur Herstellung von LatexschaumFormteilen mittels Mikrowellenenergie gedacht sind.

Allerdings muß er bei der Überprüfung feststellen, daß derartige Formen wegen zu großer Haftung zu Latexschaumstoffen, die aus Styrol-Butadien-Copolymeren hergestellt wurden, nicht eingesetzt werden können. In einem derartigen Fall ist eine Entformung nicht möglich; es bildet sich stattdessen ein fester Verbund.

Der Erfindung liegt nun die Aufgabe zugrunde, eine Form zu entwickeln, die sich gut füllen und entformen läßt und neben guter Maßhaltigkeit eine lange Nutzungsdauer bietet.

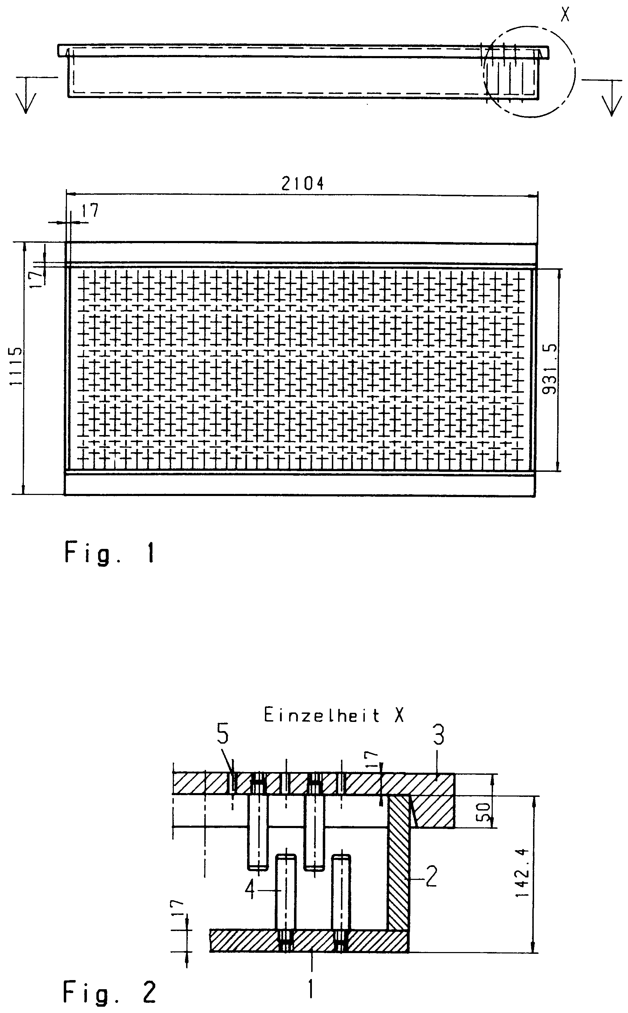

Die erfindungsgemäße Lösung der Aufgabe ist in den Figuren 1 und 2 beispielhaft dargestellt. Formenboden (**1**), Seitenwände (**2**) und Formendekkel (**3**) bestehen aus einem vorbehandelten Polymerwerkstoff auf Basis von Polyphenylenether.

Die aus anwendungstechnischen Gründen oft erforderlichen Formeneinbauten bzw. Verdrängungskörper können aus demselben Werkstoff hergestellt sein. Wegen der geringeren mechanischen Belastung kommen auch andere Kunststoffe infrage, wie z. B. Polytetrafluorethylen oder Polypropylen. Die Formeneinbauten/Verdrängungskörper (**4**) können beliebig am Boden bzw. Deckel befestigt sein. Von wirtschaftlichem Vorteil ist es aber, sie durch Gewindestutzen mit der Bodenplatte bzw. dem Deckel zu verschrauben. Das erfindungsgemäße Formenmaterial besitzt dafür eine ausreichende Gewindefestigkeit. Zur Vermeidung von Lufteinschlüssen beim Befüllen der Form werden Entlüftungslöcher in den Deckel eingebracht (**5**). Die Anzahl und Verteilung der Entlüftungslöcher ergibt sich aus der Formengeometrie und der Fließrichtung des Schaums und kann durch wenige Versuche ermittelt werden. Der Durchmesser der Löcher ist so zu wählen, daß die Luft schnell entweichen kann, der nachfließende Schaum aber nur so wenig in die Löcher eindringt, daß er beim Entformen als kleine Nippel an den Formteilen haften bleibt und dadurch die Öffnungen wieder freigibt. Der erforderliche Durchmesser kann vom Fachmann in wenigen Versuchen ermittelt werden.

Die erfindungsgemäß verwendeten Polymerwerkstoffe sind dadurch gekennzeichnet, daß folgende Bestandteile enthalten sind:
20 bis 100 Gewichtsteile Polyphenylenether (A).
0 bis 80 Gewichtsteile Polystyrol (B),
0 bis 30 Gewichtsteile schlagzähmodifizierende Zusätze (C),
0 bis 40 Gewichtsteile Verstärkungsmittel und/oder Füllstoffe (D) und
0 bis 15 Gewichtsteile Zusatzstoffe (E).

Um die Gefahr des Verziehens während der Vulkanisation auszuschalten, ist es ratsam, daß die Wärmeformbeständigkeit nach ISO 75, Methode B der Formmasse mindestens 110 °C, bevorzugt mindestens 120 °C und besonders bevorzugt mindestens 125 °C beträgt.

Der Polyphenylenether (PPE) ist im wesentlichen aus Einheiten der Formel 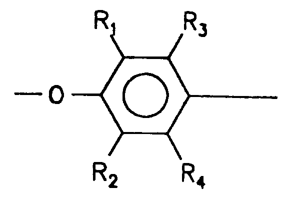
aufgebaut, wobei R₁ und R₂ entweder für eine n-Alkylgruppe mit bis zu 6 C-Atomen stehen oder R₁ Wasserstoff und R₂ einen tertiären Alkylrest mit bis zu 6 C-Atomen bedeutet; R₃ und R₄ stehen, unabhängig voneinander, für eine Methylgruppe oder Wasserstoff.

In einer bevorzugten Ausführungsform ist R₁ = R₂ = CH₃ sowie
R₃ = R₄ = H.

Diese Polyphenylenether können nach jedem dem Stand der Technik entsprechenden Verfahren aus den entsprechenden Phenolen oder 4-Halogenphenolen hergestellt werden. Üblicherweise werden als Katalysatoren Kupfer-Amin-Komplexe oder manganhaltige Systeme benutzt (vgl. DE-OSS 32 24 692 und 32 24 691 sowie US-PSS 3 306 874, 3 306 875 und 4 028 341).

Die Viskositätszahlen, bestimmt nach DIN 53 728 in Trichlormethan bei 25 °C, liegen im Bereich von 35 bis 100 ml/g (J-Wert nach DIN 53 728; Konzentration 5 g/l). Bevorzugt sind Polyphenylenether mit einer Viskositätszahl von 40 bis 70 ml/g.

Mit umfaßt werden natürlich auch modifizierte Polyphenylenether, z. B. Pfropfcopolymere mit Vinylmonomeren, Styrol oder anderen Modifizierungsreagenzien.

Die Polyphenylenether werden üblicherweise als Pulver oder Granulat eingesetzt.

Als Polystyrol-Komponente (B) werden sowohl Styrolhomopolymerisate als auch schlagzähmodifizierte Styrolpolymerisate eingesetzt. Als monovinylaromatische Verbindungen kommen dabei insbesondere Styrol in Betracht, ferner die kern- oder seitenalkylierten Styrole. Vorzugsweise wird jedoch allein Styrol verwendet. Die Homopolymerisate werden dabei nach den bekannten Verfahren in Masse, Lösung oder Suspension hergestellt (vgl. Ullmann's Encyclopädie der technischen Chemie, Band 19, Seite 265, Verlag Chemie, Weinheim 1980). Die Homopolymerisate können Molekulargewichtsmittel (Mv) von 1 000 bis 250 000 aufweisen. Die meist angewandten Verfahren zur Herstellung schlagzähmodifizierter Styrolpolymerisate sind die Polymerisation in Masse oder Lösung und Verfahren zur Masse-Suspensionspolymerisation, wie sie z. B. in den US-PSS 2 694 692 und 2 862 906 beschrieben werden; selbstverständlich sind aber auch alle anderen bekannten Verfahren anwendbar.

Als Kautschuke werden hierbei die üblicherweise für die Schlagzähmodifizierung von Styrolpolymerisaten gebräuchlichen natürlichen oder synthetischen Kautschuke eingesetzt. Geeignet sind z. B. Naturkautschuk, Polybutadien, Polyisopren und Mischpolymerisate, z. B. statistische, sequentielle oder Blockcopolymere des Butadiens und/oder Isoprens mit Styrol und anderen Comonomeren, die eine Glastemperatur unter -20 °C besitzen. Besonders geeignet sind Butadien-Polymerisate mit einem 1,4-cis-Gehalt, der zwischen 25 und 99 % liegt. Es können aber auch Acrylatkautschuke, EPDM-, Polybutylen- oder Polyoctenamerkautschuke eingesetzt werden. Die schlagzähmodifizierten Styrolpolymerisate besitzen einen Weichkomponentenanteil von 10 bis 60 Gewichtsprozent, vorzugsweise von 20 bis 45 Gewichtsprozent. Die Teilchengröße der Weichkomponente sollte im Bereich von 0,2 bis 8 µm liegen.

Als schlagzähmodifizierende Zusätze (C) sind z. B. die in den DE-ASS 19 32 234, 20 00 118, DE-OSS 22 55 930, 27 50 515, 24 34 848, 30 38 551, EP-A-O 080 666 und WO-A-83/01 254 beschriebenen unterschiedlich aufgebauten, vornehmlich aus vinylaromatischen und konjugierten Dienblöcken bestehenden Blockcopolymerisate geeignet. Es können aber auch andere schlagzähmodifizierende Zusätze, wie Polyoctenamer, Pfropf- oder Blockcopolymere aus vinylaromatischen Monomeren und EP(D)M, Acrylatkautschuke oder Gemische aus SBR-Kautschuken mit hohen und niedrigen Styrolgehalten, verwendet werden.

Als Verstärkungsmittel bzw. Füllstoffe (D) können z. B. Kurz-, Lang- oder Endlos-Glas-Fasern sowie organische oder mineralische Füllstoffe, wie z. B. Talkum oder Glaskugeln, verwendet werden.

Die erfindungsgemäße Masse kann Zusatzstoffe (E), wie z. B. Pigmente, organische Farbstoffe, Oligomere, Antistatika, Stabilisatoren und Verarbeitungshilfsmittel, enthalten. Geeignete Stabilisatoren umfassen organische Phosphite, wie z. B. Didecylphenylphosphit und Trilaurylphosphit, sterisch gehinderte Phenole, Tetramethylpiperidin-, Benzophenon- und Triazolderivate sowie Stabilisatoren auf Basis gehinderter Amine, sogenannte HALS-Verbindungen. Als Verarbeitungshilfsmittel eignen sich z. B. Polyethylen oder Wachse, wie z. B. oxidierte Kohlenwasserstoffe sowie ihre Ester- oder Amidderivate oder ihre Alkali- und Erdalkalisalze. Art und Menge der Zusatzstoffe müssen so gewählt werden, daß keine wesentliche Ankopplung des Formenmaterials im Mikrowellenfeld eintritt.

Die einzelnen Komponenten werden in bekannter Weise entweder im Batchbetrieb oder kontinuierlich in der Schmelze gemischt. Für das Schmelzen und Vermischen eignen sich die üblichen Geräte zur Behandlung von hochviskosen Schmelzen. Besonders geeignet sind Doppelschneckenkneter und Kokneter.

Die erfindungsgemäßen Formmassen werden bevorzugt dadurch hergestellt, daß der Polyphenylenether, gegebenenfalls zusammen mit einer Schlagzähkomponente und/oder einem Styrolpolymerisat und den Komponenten (D) bis (E) aufgeschmolzen und vermischt wird. Die Komponenten (B) bis (E) können auch in die Schmelze von (A) eingearbeitet werden. Es kann beispielsweise ein kontinuierlich arbeitender, gleichsinnig drehender Zweiwellenkneter verwendet werden. Die Schmelzetemperatur liegt hierbei zwischen 250 und 350 °C, vorzugsweise zwischen 270 und 320 °C. Eine gleichzeitige Entgasung der Schmelze ist zweckmäßig.

Das erfindungsgemäße Formenmaterial besitzt eine sehr hohe Haftung zu SBR- und SBR/NR-Kautschuken; daher ist eine Passivierung zumindest der inneren Formenoberfläche erforderlich. Wie Versuche gezeigt haben, kann die Haftung beispielsweise durch folgende Maßnahmen unterbunden oder soweit reduziert werden, daß bei Verwendung der üblichen wasserlöslichen Trennmittel (z. B. 5%ige wäßrige Polywachs-6000-Lösung) eine problemlose Entformung der Artikel möglich ist:
- mehrstündige Lagerung der Form in Heißluft und/oder Licht,
- Abwaschen der Formenoberflächen mit alkalischen Seifen (z. B. Kaliumoleat) oder
- kurzzeitiges Beschichten des Formenmaterials mit einem SBR/NR-Latexfilm.

Die nach dieser Erfindung hergestellten Formen sind aufgrund ihrer wesentlich längeren Nutzungsdauer preiswerter. Sie ermöglichen die Herstellung großer Latexschaumformteile mit der geforderten Maßgenauigkeit. Durch die schnelle Befüllung und Entformung werden im kontinuierlichen Fertigungsprozeß die Zykluszeiten verkürzt. Der Einsatz von Verdrängungskörpern mit Schraubgewinde ermöglicht eine schnelle Anpassung an anwendungstechnische Notwendigkeiten und deren Wiederverwendung in neuen oder anderen Formen.

Die Herstellung und Zusammensetzung von Latices, die für diese Erfindung geeignet sind, sind beispielsweise in der DE-OS 37 04 118 und der DE-OS 34 47 585 angegeben.

Beim Herstellen von Latexschaum nach dem Schaumschlagverfahren wird der Latex mit Vulkanisiermitteln und gegebenenfalls Verarbeitungshilfsmitteln versetzt und durch Einschlagen von Luft auf die gewünschte Dichte gebracht. Nach Erreichen des entsprechenden Verschäumungsgrades wird Geliermittel zugemischt und der Schaum in die Form gefüllt.

Zum Zeitpunkt des Einfüllens des Latexschaums kann die Form eine Temperatur von 50 bis 100 °C haben. Im Gegensatz zum bisher üblichen Verfahren braucht die Form nicht auf eine Temperatur unter 35 °C abgekühlt zu werden. Ferner ist es nicht notwendig, den geschäumten Latex nach einer speziellen Rezeptur herzustellen. Wegen der geringen Wärmeleitfähigkeit des nichtmetallischen Materials wird der Latexschaum beim Gelieren auch an den Stellen nicht unzulässig beeinträchtigt, die die Formenwandung berühren. Die Wärme, die die Form bei den vorhergehenden Vulkanisierprozessen aufgenommen hat, bleibt in der Form fast vollständig erhalten.

Zum Gelieren und Vulkanisieren wird der in der Form befindliche Latexschaum mittels Mikrowellen innerhalb weniger Minuten auf eine Temperatur bis 100 °C erwärmt. Die Mikrowellen haben eine Frequenz von 1 bis 100 GHz, bevorzugt 2 bis 25 GHz. Die Abmessungen des Mikrowellenfeldes lassen sich in bekannter Weise an die Abmessungen der Form anpassen.

Die Schichtdicke des in die Form eingefüllten Latexschaums kann in weiten Bereichen bis hinauf zu mehreren Dezimetern variiert werden. Auch in sehr dicker Schicht geliert und vulkanisiert der Schaum sehr gleichmäßig.

Die Verweilzeit des Latexschaums im Mikrowellenfeld ist abhängig von der Leistungsdichte des Feldes, vom Wärmebedarf des Latexschaums, der zum Erreichen der gewünschten Temperatur notwendig ist, und von der Zeit, die der Schaum zum Vulkanisieren benötigt. Die optimale Verweilzeit und die einzustellende Leistungsdichte des Feldes werden in einem Vorversuch ermittelt.

Bei einer Dichte des Schaumstoffs von 0,1 g/cm³ ist eine Verweilzeit von 5 Minuten bei 3 cm Dicke und von 8 Minuten bei 15 cm Dicke des Schaumstoffs erreichbar, sofern man mit unveränderter Senderleistung arbeitet.

Gegenüber dem bisher praktizierten Verfahren sind die Zykluszeit und der Energieverbrauch wesentlich verringert.

In den folgenden Beispielen wird die Erfindung näher erläutert.

### Beispiele

Als anspruchsgemäße Formmassen auf Basis von Polyphenylenether werden die Typen VESTORAN^{R} 1300, VESTORAN^{R} 1300 GF und VESTORAN^{R} 1900 der Hüls AG, D-4370 Marl, verwendet.

Das hier verwendete Verfahren zur Herstellung von Latexschaumstoff mittels Mikrowellenerwärmung ist in der DE-OS 39 00 809 beschrieben.

Als Versuchslatices wurden die Styrol-Butadien-Copolymerisate BUNATEX^{R} SL 2800 und BUNATEX^{R} SL 3510 (beide Hüls AG, Marl) sowie Verschnitte mit Naturlatex eingesetzt. Die BUNATEX^{R} -Typen hatten einen pH-Wert von 10,5 und einen Restmonomergehalt von 700 ppm. Der Styrolgehalt im Polymeren betrug beim BUNATEX^{R} SL 2800 ca. 28 % und beim BUNATEX^{R} SL 3510 ca. 35 %. Die Latices enthielten die üblichen Gelier-, Vulkanisier- und Verarbeitungshilfsmittel.

Maße und Konstruktionseinzelheiten der verwendeten Formen sind in den Figuren 1 und 2 dargelegt. Die Verdrängungskörper bestanden in allen Beispielen aus Polypropylen. Der Durchmesser der Entlüftungsbohrungen betrug 2,5 mm. Zum Zeitpunkt des Befüllens war die Formentemperatur 80 bis 95 °C und die Latexschaumtemperatur 15 bis 20 °C.

Tabelle 1 zeigt die Erwärmung und damit das Absorptionsverhalten verschiedener Kunststoffe bei Mikrowellenbestrahlung. Die Behandlung erfolgte in einem Mikrowellen-Applikator bei einer Leistungsdichte von 20 kW/m³. Das Gewicht der Probekörper betrug 25 g.

**Tabelle 1**

| Produkt | Verweil-zeit (min) | Temperatur (°C) |
|---|---|---|
| Polyethylen (Hüls AG) | 10 | 36 |
| Polypropylen (Hüls AG) | 10 | 37 |
| Polysulfon, hell (Röhm GmbH) | 10 | 49 |
| Polysulfon, schwarz (Röhm GmbH) | 10 | 54 |
| Polycarbonat (Röhm GmbH) | 10 | 57 |
| Polyphenylenoxid (VESTORAN^{R} 1300) | 10 | 38 |
| Polyphenylenoxid (VESTORAN^{R} 1900) | 10 | 36 |
| Polyester (VESTOPAL^{R} 152) | 4 | Erweichung |
| Polyoxymethylen (HOSTAFORM^{R} 2321) | 4 | Erweichung |
| Polyvinylidenfluorid (ohne Produktbez.) | 3,5 | Erweichung |
| Polyvinylidenfluorid (DYFLOR^{R} 2000 ME) | 1,5 | Erweichung |
| Polyamid 6/3/T (TROGANID^{R} T 5000) | 4,5 | Erweichung |
| Polyamid 6.12 (VESTAMID^{R} D 18) | 3,5 | Erweichung |
| Polyamid 12 (VESTAMID^{R} L 1640) | 2,5 | Erweichung |
| Polybutylenterephthalat (VESTODUR^{R} B 1000) | 6 | Erweichung |

Die Passivierung der erfindungsgemäßen Werkstoffe wurde durch folgende Maßnahmen erreicht:

**Tabelle 2**

| Werkstoff | Passivierungsmaßnahme |
|---|---|
| VESTORAN^{R} (1300, 1300-GF 30, 1900)) | I: 2 h/130 °C + 1 h/70 °C |
| VESORAN^{R} (1300, 1300-GF 30, 1900)) | II: 17,5%iges Kaliumoleat, Trocknung 1 h/70 °C |
| VESTORAN^{R} (1300, 1300-GF 30, 1900)) | III: SBR/NR-Verschnitt 1 : 1 ohne Vulkanisationsmittel, Trocknung 1 h/70 °C; anschließende mechanische Entfernung durch Abziehen des Films |

**Tabelle 3**

| Bsp. | Werkstoff | Maßhaltigkeit (%) | Entformungszeit (sec) | Rißanfälligkeit Zyklen |
|---|---|---|---|---|
| 1 | Polyethylen | ungenügend | < 90 | -^{b)} |
| 2 | Polypropylen | ungenügend | < 90 | -^{b)} |
| 3 | Polytetrafluorethylen | ungenügend | < 90 | -^{b)} |
| 4 | Polysulfon | gut (< 3) | < 90 | 15 |
| 5 | Polycarbonat | gut (< 3) | < 90 | 10 |
| 6 | VESTORAN^{R} (1300, 1900) unbehandelt | gut (< 3) | Entf. wegen zu hoher Haftung nicht möglich | -^{b)} |
| 7 | VESTORAN^{R} 1300^{a)} | gut (< 3) | < 90 | > 100 |
| 8 | VESTORAN^{R} 1300-GF 30^{a)} | gut (< 3) | < 90 | > 100 |
| 9 | VESTORAN^{R} 1900^{a)} | gut (< 3) | < 90 | > 100 |

| | | | | |
|---|---|---|---|---|
| a) Passiviert nach I (siehe Tabelle 2) | | | | |
| b) Nicht gemessen | | | | |

Werkstoffe, die bei der Mikrowellenbestrahlung (Tabelle 1) bereits Erweichungen zeigten, wurden nicht weiter geprüft.

Die Maßhaltigkeit wurde als Auswirkung der Formenmaterial-Steifigkeit und -Temperaturbeständigkeit an der Dickendifferenz zwischen Randzone und Mitte der Matratze beurteilt; sie sollte nicht größer als 3 % sein. Die erforderliche Zeit zur fehlerfreien Entformung der Matratze wurde als Maß der Haftung betrachtet und sollte weniger als 90 Sekunden betragen. Die Rißanfälligkeit des Formenmaterials wurde anhand der Anzahl der Produktionszyklen bis zum Auftreten erster, mit dem bloßen Auge deutlich erkennbarer Risse beurteilt.

Wie die Tabelle 3 zeigt, wird bei jedem der drei VESTORAN^{R} -Typen eine schnelle Entformung erreicht. Nach 100 Zyklen (Ende der Prüfung) waren keinerlei Risse zu erkennen.

Nach den Passivierungsmaßnahmen II bzw. III wurden entsprechende Ergebnisse erhalten.

Bei den übrigen getesteten Materialien war entweder die Maßhaltigkeit nicht ausreichend oder die Rißanfälligkeit bei weitem zu hoch, wogegen bei unpassiviertem VESTORAN^{R} ein fester Verbund entstand.

## Patentansprüche

1. Form zur Herstellung von Latexschaumformteilen mittels Mikrowellenerwärmung,
dadurch gekennzeichnet,
daß die Formenwandung aus einer Formmasse besteht, die folgende Bestandteile enthält:
a) 20 bis 100 Gewichtsteile Polyphenylenether, der im wesentlichen aus Einheiten der Formel 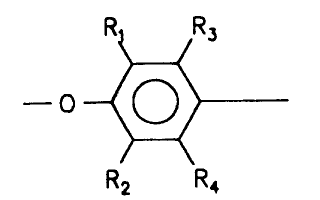 aufgebaut ist, wobei R₁ und R₂ entweder für eine n-Alkylgruppe mit bis zu 6 C-Atomen stehen oder R₁ Wasserstoff und R₂ einen tertiären Alkylrest mit bis zu 6 C-Atomen bedeutet; R₃ und R₄ stehen, unabhängig voneinander, für eine Methylgruppe oder Wasserstoff;
b) 0 bis 80 Gewichtsteile Styrolpolymerisate,
c) 0 bis 30 Gewichtsteile schlagzähmodifizierende Zusätze,
d) 0 bis 40 Gewichtsteile Verstärkungsmittel und/oder Füllstoffe sowie
e) 0 bis 15 Gewichtsteile Zusatzstoffe,
wobei die Formenoberfläche passiviert ist.

2. Form gemäß Anspruch 1,
dadurch gekennzeichnet,
daß die Formmasse eine Wärmeformbeständigkeit nach ISO 75, Methode B, von mindestens 110 °C, bevorzugt von mindestens 120 °C und besonders bevorzugt von mindestens 125 °C aufweist.

3. Form gemäß den Ansprüchen 1 oder 2,
dadurch gekennzeichnet,
daß im Polyphenylenether R₁ und R₂ jeweils für CH₃ und R₃ und R₄ jeweils für Wasserstoff stehen.

4. Form gemäß einem der vorhergehenden Ansprüche,
dadurch gekennzeichnet,
daß als schlagzähmodifizierender Zusatz Polyoctenamer verwendet wird.

5. Form gemäß einem der vorhergehenden Ansprüche,
dadurch gekennzeichnet,
daß sie Einbauten besitzt, die gegebenenfalls aus anderen Kunststoffen bestehen.

6. Form gemäß einem der vorhergehenden Ansprüche,
dadurch gekennzeichnet,
daß sie im Deckel Entlüftungslöcher enthält.

7. Form gemäß einem der vorhergehenden Ansprüche zur Herstellung von Matratzen oder Polstern.

8. Verfahren zur Herstellung von Latexschaumformteilen,
dadurch gekennzeichnet,
daß eine Form gemäß einem der vorhergehenden Ansprüche mit einem Latex-Schlagschaum gefüllt wird, der Vulkanisier-, Gelier- und Verarbeitungshilfsmittel enthält, und der Schaum durch Mikrowelleneinstrahlung geliert und vulkanisiert wird.
